(19) Europäisches Patentamt
European Patent Office
Office européen des brevets

(11) Publication number: **0 028 394**
**A1**

(12) # EUROPEAN PATENT APPLICATION

(21) Application number: **80106643.2**

(22) Date of filing: **29.10.80**

(51) Int. Cl.³: **C 08 F 291/02**
C 08 F 279/02

(30) Priority: **31.10.79 US 89835**

(43) Date of publication of application:
**13.05.81 Bulletin 81/19**

(84) Designated Contracting States:
**BE DE FR GB IT NL**

(71) Applicant: **THE DOW CHEMICAL COMPANY**
**2030 Abbott Road Post Office Box 1967**
**Midland, Michigan 48640(US)**

(72) Inventor: **Cave, Burdette Bernard**
**3810 Pearl Drive**
**Colorado Springs, Colorado(US)**

(72) Inventor: **Roe, James Myron**
**4608 Forestview**
**Midland Michigan(US)**

(74) Representative: **Hann, Michael, Dr. et al,**
**Ludwigstrasse 67**
**D-6300 Giessen(DE)**

(54) **Control polymerization of addition polymerizable monomers with small amounts of non-conjugated difunctional monomers.**

(57) Inclusion in the reaction mass of certain difunctional monomers (including divinylbenzene) in controlled, miniscule proportions for polymerization of styrene and other monoethylenically-unsaturated, addition-polymerizable monomers provides either significantly increased rates of polymerization production of polymer product obtained at given molecular weight values or noticeably increased molecular weight values at fixed polymerization rates, or both to more or less desired individual-effect extents.

EP 0 028 394 A1

# CONTROL POLYMERIZATION OF ADDITION POLYMERIZABLE MONOMERS WITH SMALL AMOUNTS OF NON-CONJUGATED DIFUNCTIONAL MONOMERS

The use of difunctional monomers having unconjugated double bonds in their structures in free-radical polymerization of various addition-polymerizable, monethylenically-unsaturated monomers, including, for example, styrene, is not new. As an illustration, U.S. Patent No. 2,089,444 deals generally with styrene polymer products made with small amounts of divinyl benzene.

However, nothing in the prior art appears to teach or lead to effective and reliable molecular weight and/or polymerization rate regulation in free-radical addition polymerizations using very small, controlled quantities of difunctional monomers during polymerization of the addition-polymerizable monomer.

Thus, the present invention relates to an advantageous means of making various polymers, copolymers and inter- and graft-polymers and copolymers of styrene and other equivalent monoethylenically-unsaturated,

addition polymerizable monomers in such a way that, without resort to equipment alteration and/or extraordinary process variation, the polymer product is obtained with generally higher molecular weight and better physical property characteristics, e.g. improved stress crack resistance and/or the product is obtained at meaningfully accelerated rates of production under constant operating conditions. The technique of this invention requires the utilization of very small quantities of a difunctional monomer, such as divinyl benzene, in prescribed proportion added at the commencement of polymerization or subsequently to the reaction mass during the course of polymerization at an intermediate stage of conversion thereof, there being no particular changes(s) in apparatus and/or basic processing procedure necessitated thereby.

More particularly, this invention pertains to an improved and highly advantageous method of manufacture of thermoplastic addition polymers which comprises starting with a mass of a monoethylenically-unsaturated, addition--polymerizable main monomer intended for conversion to polymeric product which, including styrene per se, is (co)polymerizable with styrene; subjecting the mass to free-radical polymerization conditions; while incorporating in the mass prior to completion of polymerization a miniscule proportion of a difunctional monomer that is at least substantially free of conjugated double bonds, excluding any which exist in a ring form, in its structure and which is interpolymerizable with styrene, the incorporated proportion being one that is on the order of less than one molecule of difunctional monomer per each two polymer chains of polymerized main monomer to be obtained as final product polymer.

The basic principles of styrene and equivalent monomer polymerizations are widely known to those skilled in the art and are not described herein.

The proportion utilized of the difunctional monomer should be less than one (1) molecule (or mole, in gravimetric concept) per each two (2) complete, integral unit polymer chains of the addition polymer being produced whether or not the polymer product is substantially strictly linear or more or less branch-structured in its morphology. More than this of the difunctional monomer tends to create undesired cross-linked polymer product networks. In most systems of interest, it is advantageous for the quantity of difunctional monomer employed to be not more than 600 parts per million by weight (i.e., "ppm"), based on the weight of the addition monomer in the reaction mass in which the difunctional monomer is included. Under extraordinary circumstances, however, one may use as much as 1,000 ppm of the difunctional monomer; as in situations where the reaction mass contains literally abnormally high quantities of solvent and is being polymerized at unusually elevated temperature levels. With the normally-encountered polymerization operations, more than 600 ppm of the difunctional monomer does cause unwanted gellation problems in the system. Between 50 and 200 ppm of the difunctional monomer are preferred.

Although mass (or bulk) polymerization is preferably employed in the practice of the present invention, any process technique may be utilized including suspension, emulsion and solution procedures. Either thermal or catalyzed reactions may be utilized; with normal operating temperature schedules involved in the

manufacture. Thus, as in styrene polymerizations, the employed temperature for polymerization may fall in a wide range between 0° and 200°C depending more or less on such factors as monomer reactivity, catalyst usage (if any, especially as to those operable at extreme low temperatures) and so forth. Typically, a temperature (which may be and often is varied during the course of the reaction) in the range of from 80-170°C is employed. The reaction mass is ordinarily subjected to some form of agitation during polymerization. Conversion is ordinarily continued until at least 60-80 percent by weight (wt. %) of polymer solids are obtained in the reaction mass. There are no practical limitations of apparatus usage involved in practice of the invention; the set-up associated with any given procedure being followed being generally utilizable therefor.

While styrene is a preferred monomer, other alkenyl aromatic monomers (or mixtures thereof with or without styrene) can also be beneficially employed. These include those having the Formula:

$$CH_2{:}CGAr, \qquad (I)$$

wherein G is hydrogen or methyl and Ar is an aromatic radical, including various alkyl and halo-ring-substituted aromatics, of from 6 to 10 carbon atoms.

Besides styrene, species illustrations of the indicated alkenyl aromatic monomers are alpha-methyl styrene, vinyl toluene, the several chlorostyrenes (such as the mono- and dichloro-variants), the dimethyl styrenes, vinyl naphthalene and so forth. Still other monomers that are adaptable for use in practice of the present invention include: (i) vinyl halides, particularly vinyl

chloride; (ii) acrylonitrile and methacrylonitrile; (iii) various vinyl organic acid esters such as vinyl acetate, vinyl propionate, etc.; (iv) vinylidene chloride; (v) acrylic and methacrylic acids and their addition-polymerizable esters; (vi) maleic anhydride; and so forth.

Divinylbenzene, divinyltoluene, diisopropenylbenzene and diisopropenyltoluene (or mixtures thereof) are particularly advantageous for utilization as the difunctional monomer in practice of the present invention. A number of others can, however, be utilized with advantage. These include those which are generally "divinyl-" and/or "diisopropenyl-" in nature and are of a general structure according to one or another of the Formulae:

$H_2C=CH-R-COO-R'-O-R''-CH=CH_2$; (II)

$C=C-R-OR'-OR''-C=C$; (III)

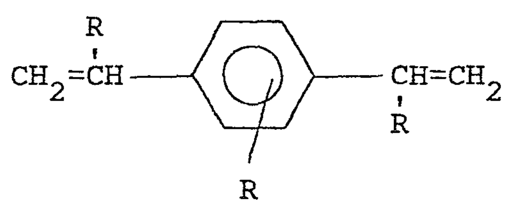

(IV)

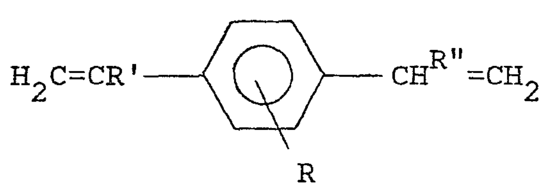

(V)

wherein each R, R' and R" can independently be on organic radical consisting of aliphatic, including cycloaliphatic, units containing from 1 to 12 carbon

atoms; aromatic, including substituted aromatic, units containing from 6 to 12 carbon atoms; plus diacrylates, dimethacrylates, dimaleates and difumarates of the respective Formulae:

$$CH_2{=}CH{-}COO{+}CHR{+}CH_2{+}_xCHRO{+}_yCOCH{=}CH_2, \qquad (VI)$$

(Diacrylate)

$$CH_2{=}CCH_3{-}COO{+}CHR{+}CH_2{+}_xCHRO{+}_yCOCCH_3{=}CH_2, \qquad (VII)$$

(Dimethacrylate)

$$HOOC{-}CH{=}CHCOO{+}CHR{+}CH_2{+}_xCHRO{+}_yCOH{-}CH{=}CH{-}COOH, \qquad (VIII)$$

(Dimaleate)

and/or

$$HOOC{-}CH{=}COO{+}CHR{+}CH_2{+}_xCHRO{+}_yCO{-}CH{=}CH{-}COOH, \qquad (IX)$$

(Difumarate)

in each of which R is as above defined and x and y, independently, are integers having values between 1 and 100; as well as polyalkoxides of the Formula:

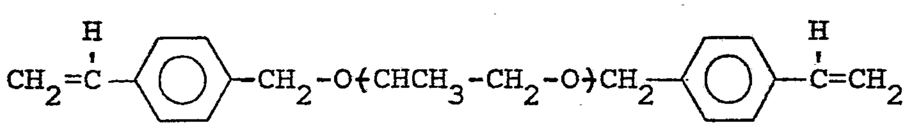 , (X)

in which x is an integer as above defined.

It is interesting, and sometimes of benefit, that when higher molecular weight difunctional monomers of the Formulae (II) through (X) are employed unreacted residues thereof are frequently capable of advantageous

functioning as plasticizers and/or lubricants for the resulting beneficial polymer compositions in which they are contained.

When rubber-modified, impact grade plastics products are prepared, it is customary to incorporate in the composition from, 1-15 wt. % of an unsaturated, graft-copolymerizable stock of natural or synthetic rubbery elastomer for interpolymerization with the monoethylenically-unsaturated monomer in the reaction mass; all according to known procedures. Polybutadiene or a polybutadiene derivative may be employed as the modifying rubber, although, if desired, natural rubbers may also be used as may styrene/butadiene polymers (as, for example, of the well-known "GRS"-type), polyether elastomers, etc.

Polymer compositions prepared in accordance with the present invention are thermoplastic and are suitable for extrusion and injection molding. They are generally gel-free when a 5 weight percent solution in toluene is prepared. When rubber modified impact grade plastic products are prepared, the rubber particles in the polymer matrix are cross-linked and a toluene solution will exhibit only rubber gels which may or may not, depending on process conditions, contain occluded polymer of the matrix. The matrix polymer is substantially gel-free.

Practice of the present invention has, primarily, a pronounced desirable effect on the molecular weight of the involved product, tending to noticeably increase both the number average molecular weight (i.e., "$M_n$") and the weight average molecular weight (i.e.,

"$M_w$") values, (as determined by gel permeation chromatography), of the so-processed material. It also has definite influence on rheology of the manufactured polymer product, especially as regards the important $M_w$:$M_n$ ratio. In this connection, an ideal $M_w$:$M_n$ ratio for most molding and extrusion purposes and especially insofar as concerns styrene polymer plastics products is on the the order of 2.0 - 3.

Earlier addition of the difunctional monomer to the reaction mass usually gives a broader and numerically increasing spread of the resultant $M_w$:$M_n$ ratio obtained in the achieved product; this typically being in the range from 2.5-5.6. On the other hand, difunctional monomer incorporation after substantial conversion has occurred tends to render the realized $M_w$:$M_n$ ratio, in a more narrow and lesser-decreasing spread in the neighborhood of an approximate 2.5-2.1 range; this usually being observable when instead of going in with starting main monomer feed the difunctional monomer is added after, for example, at least half of monomer-to-polymer conversion has taken place (i.e., upon reaching of 50 wt. % polymer solids in the reaction mass). If desired, difunctional monomer addition can be incrementally made to the reaction mass during the progress of the polymerization, in which event somewhat compromised rheological influence may be noted (which, in fact, may be desirable for getting specific, rather "tailor-made" effects respecting the ratio of $M_w$:$M_n$ in the obtained product).

The outstanding feature in practice of the present invention is the great versatility it renders to polymerization procedures. Thus, for given operating

conditions, product molecular weight can generally be increased by at least 10% or so with utilization of this invention. Conversely, if only a desired level of molecular weight as a standard is wanted, application of the present invention allows much faster rates so as to give greater production output from given apparatus units for manufacture. Yet additional to this, however, the present invention may be applied to produce acceptable polymer product at a given molecular weight standard using higher than normal operating temperatures for polymerization (at correspondingly likewise increased unit output from given equipment installations) which otherwise might have an intolerable deleterious molecular-weight degradation effect on polymer product.

The following illustrative examples show the simplicity and great benefit of the present invention. In all instances, the "parts" and "percentages" given are by weight, based on total weight of involved composition or reaction mass. All temperature readings are in °C.

First Illustration

Several polybutadiene-modified impact polystyrene products were made pursuant to the present invention using various amounts of divinyl benzene as a molecular weight control agent. A heat-controlled and otherwise adequately outfitted and instrumented stirred-kettle type of reactor was employed.

The feed batch contained:

| Parts, ppm or % | Ingredient |
|---|---|
| 1,245 pts. | Styrene (Main Monomer) |
| 165 pts. | Ethyl Benzene (Viscosity, etc., Control Solvent) |

(Continued)

| Parts, ppm or % | Ingredient |
|---|---|
| 73.5 pts. | "Taktene® 1202" Polybutadiene Rubber |
| 2.1 % | "Irgonox® 1076" |
| 400 ppm | Peroxide catalyst |
| 26.25 ppm | Mineral oil |

"Irgonox® 1076" is octadecyl 3-(3',S'-di--tert.-butyl-4'hydroxpheny)propionate having the structure:

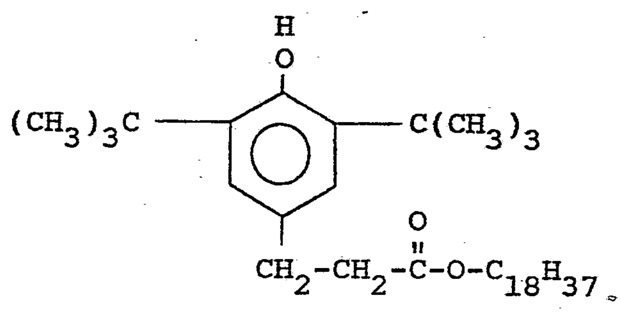

(XI)

The catalyst was 1,1 bis-di-tert.-butyl peroxy cyclohexane of the Structure:

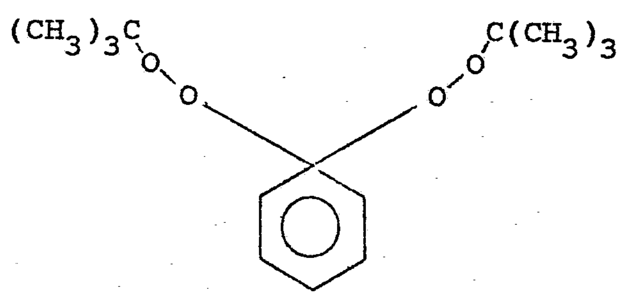

(XII)

Three polymerizations were conducted under substantially constant temperature profiles of from 104° to 164°C for 6.75 hours, the only difference being the amount of divinylbenzene in the feed. The results were as follows:

| Divinylbenzene (ppm) | 0 | 50 | 75 |
|---|---|---|---|
| % Solids | 71.1 | 72.6 | 73.7 |
| $M_w$ | 250,000 | 275,000 | 281,000 |
| $M_n$ | 114,000 | 118,000 | 119,000 |
| $M_w/M_n$ | 2.2 | 2.3 | 2.4 |

The increase in molecular weight and the $M_w/M_n$ ratio with miniscule amounts of divinylbenzene being present in the feed is clearly seen.

Second Illustration

A polybutadine-modified impact polystyrene product was made using diisopropenyl benzene (DIPB) as a molecular weight control agent. A heat-controlled and otherwise adequately outfitted and instrumented stirred kettle-type reactor was employed.

The feed batch contained:

| Parts or ppm | Ingredient |
|---|---|
| 1207 | Styrene |
| 134 | Ethyl benzene |
| 84 | Taktene® 1202 |
| 3.75 | Mineral oil |
| 2.25 | Irgonox® 1076 |
| 500 ppm | Peroxide catalyst used in first example |

The second-charge addition consisted of 300 ppm (based on anticipated unreacted monomer at point of incorporation) in the amount of 0.268 part DIPB mixed into 75 parts of the mixture of styrene ethylbenzene.

After reactor charging, the following procedure and observation schedule was carried out (time in minutes):

| Time From Start | Point | Notations |
|---|---|---|
| "Zero" | 1 | Commence heating and stirring. |
| 40 | 2 | Polymerization Temperature reached (122°). |
| 100 | 3 | Solids in reaction mass of 26.5% @ 116°. |
| 130 | 4 | Temperature increased by 5° to 125° level. |
| 150 | 5 | Temperature raised another 3° - reaction mass @ 124°.* |
| 160 | 6 | Solids of 41.2% @ 126°. Second charge addition made 3 mintues later. |
| 170 | 7 | Temperature raised another 3° - reaction mass @ 128°.* |
| 190 | 8 | Temperature raised another 3° - reaction mass @ 130°.* |
| 205 | 9 | Solids content 53.4% - reaction mass @ 133.5°. |
| 210 | 10 | Temperature raised another 5° - reaction mass @ 132°.* |
| 230 | 11 | Temperature raised another 5° - reaction mass @ 136°.* |

(Continued)

| Time From Start | Point | Notations |
|---|---|---|
| 250 | 12 | Temperature raised another 5° - reaction mass @ 140.5°.* |
| 270 | 13 | Temperature raised another 5° - reaction mass @ 145°.* |
| 290 | 14 | Temperature raised another 5° - reaction mass @ 145°.* |
| 310 | 15 | Temperature raised another 5° - reaction mass @ 152.5°.* |
| 330 | 16 | Temperature raised another 5° - reaction mass @ 156.5°.* |
| 350 | 17 | Temperature raised another 5° - reaction mass @ 161°.* |
| 370 | 18 | Reaction mass @ 164°. Emptied reactor. Final solids 79.4%. Production devolatilized for 30 minutes in oven under 5 mm Hg max. pressure @ 215°. |

* Indicates change in temperature control unit for reactor heating; the reaction mass temperature not always corresponding to heat input demand.

The $M_w/M_n$ ratio was 2.339 as reckoned from an $M_w$ of 277,000 and an $M_n$ of 119,000.

Third Illustration

A number of Runs were made to produce ordinary, so-called "general purpose" homopolystyrene by normal mass polymerization procedures using thermal influence alone for the free radical polymerization. A portion of the Runs were made in a standard recirculated coil reactor in which the monomeric styrene was pump-forced through a heated tubular coil. In another portion of the Runs,

polymerization was conducted in a type of equipment which actually was and is known as a Continuous Stirred Tank Reactor (i.e., "CSTR"); the same amounting to no more than a stirred, efficient-mixing autoclave with a reflux column attachment permitting the reaction mass to be processed at the boil with condensed evaporated vapors continuously returned thereto via the reflux unit. In each of the series of Runs, some homopolystyrene (i.e., "PS") was made in the conventional way without any additive. The remainder of the Runs in each series was made with differing additions in the starting monomeric styrene charge of divinylbenzene (i.e., "DVB") to provide increased reaction rate(s).

It is significant to bear in mind that, for most commercial styrene polymer preparations, a 25%/hr. conversion figure is considered to be standard insofar as satisfactory rates of production are concerned. Further, the output with no DVB in the reaction mass was approximately 45 kg./hr.; while that with 60 ppm DVB (with no change in operating conditions) was about 67.5 kg./hr.; and that with 120 ppm DVB was 77 kg./hr. The dramatic increase in production rate with no sacrifice of product PS quality is indeed significant.

TABLE

Characteristics and Properties of PS Controlled by DVB Incorporation During Polymerization

| Run | #1 | #2 | #3 | #4 |
|---|---|---|---|---|
| Characteristic and/or Property | | | | |
| ppm DVB in Reaction Mass | 0 | 60 | 120 | 120 |
| % Conversion per Hour | 20.2 | 30.2 | 35.4 | 37.1 |
| $M_n$ | 126,000 | 125,000 | 103,000 | 115,000 |
| $M_w$ | 320,000 | 313,000 | 299,000* | 284,000 |
| $M_w/M_n$ | 2.55 | 2.49 | 2.90 | 2.47 |
| Tensile Strength psi (kg/sq. cm) | 6570 (461.9) | 6540 (459.8) | 6530 (459.1) | 6480 (455.6) |
| Flexural Strength psi (kg/sq. cm) | 14,050 (987.8) | 13,600 (956.2) | 14,700 (1033.5) | 13,730 (965.3) |
| Melt Flow Resistance (MFR) - Condition "L" | 1.42 | 2.15 | 2.26 | 3.31 |
| Heat Distortion Temperature (°C) | 108 | 107 | 108 | 107 |
| Melt Tension | 4.25 | 4.25 | 5.3 | 3.2 |

* For Comparative purposes, the $M_w$ of the obtained polymer without DVB in the reaction mass would have been 200,000.

Fourth Illustration

A series of batch polymerizations comparing the effects of no divinylbenzene (DVB) with small amounts of DVB being added at various stages of polymerization were carried out. The charge to the reactor vessels was:

| | |
|---|---|
| 25 grams | Taktene® 1202 |
| 6 grams | Mineral oil |
| 50 grams | Ethyl benzene |
| 1269 grams | Styrene |
| No catalyst | |

The polymerizations were carried out at 130°-165°C to about 65 solids. The various runs and results were as follows:

| DVB | $M_w$ | $M_n$ | $M_w/M_n$ |
|---|---|---|---|
| None | 265,000 | 124,000 | 2.14 |
| 150 ppm in original feed | 403,000 | 163,000 | 2.47 |
| 150 ppm in at 30% solids | 320,000 | 131,000 | 2.44 |
| 150 ppm in at 50% solids | 308,000 | 150,000 | 2.05 |

This example illustrates that early addition of the difunctional monomer increases both the molecular weight and the $M_w/M_n$ ratio.

The products of the foregoing illustrations were all thermoplastic polymers suitable for extrusion and injection molding, substantially free of gels and soluble in toluene at a 5 weight percent concentration.

WHAT IS CLAIMED IS:

1. Method of making thermoplastic addition polymers comprising:

(a) starting with a mass of a monoethylenically-unsaturated, addition-polymerizable main monomer which, including styrene per se, is (co)polymerizable with styrene;

(b) subjecting the mass (a) as a reaction mass to free-radical polymerization conditions; while

(c) incorporating in the mass (b) prior to completion of polymerization a miniscule proportion of a difunctional monomer that is its essential structure at least substantially free of conjugated double bonds and which is interpolymerizable with styrene, the incorporated proportion being one that is on the order of less than one molecule of the difunctional monomer per each two integral unit, effectively by single polymer chains of polymerized main monomer (a) to be obtained as final product polymer.

2. Method of Claim 1, wherein the difunctional monomer is incorporated in the reaction mass in an effective amount of up to 600 ppm of unreacted monomer in the reaction mass.

3. Method of Claim 1, wherein the difunctional monomer is incorporated in the reaction mass in an amount of between 50 and 200 ppm of unreacted monomer in the reaction mass.

4. Method of any one of Claims 1, 2 or 3, wherein the difunctional monomer is incorporated in the reaction mass at the commencement of polymerization.

5. Method of any one of Claims 1, 2 or 3, wherein the difunctional monomer is incorporated in the reaction mass during the polymerization.

6. Method of any one of Claims 1 to 5, wherein the main monomer mass (a) is at least substantially entirely an alkenyl aromatic monomer of the Formula:

$CH_2$:CGAr, (I)

wherein G is hydrogen or methyl and Ar is an aromatic radical, including alkyl- and halo- ring-substituted aromatics, of from 6 to 10 carbon atoms.

7. Method of Claim 6, wherein styrene is the alkenyl aromatic monomer of Formula (I).

8. Method of any one of Claims 1 to 7, wherein the difunctional monomer is divinyl benzene.

9. Method of any one of Claims 1 to 7 wherein the difunctional monomer is diisopropenyl benzene.

10. Method of any one of Claims 1 to 10 including providing in the reaction mass between 1 and 15 weight percent, based on the weight of the reaction mass, a dispersed, unsaturated rubbery elastomer that is capable of being graft copolymerized by and is interpolymerizable with the main monomer.

0028394

European Patent Office

# EUROPEAN SEARCH REPORT

Application number

EP 80 10 6643

## DOCUMENTS CONSIDERED TO BE RELEVANT

| Category | Citation of document with indication, where appropriate, of relevant passages | Relevant to claim |
|---|---|---|
| X | FR - A - 2 320 316 (BASF)<br>*"Revendication" 1; page 2, lines 1-2 *<br>-- | 1-4, 6,7, 10 |
| | GB - A - 1 074 322 (STERLING MOULDING MATERIALS)<br>* Claims 1-4; page 1, lines 78-83 *<br>---- | 1-4, 6-8, 10 |

CLASSIFICATION OF THE APPLICATION (Int. Cl.3)

C 08 F 291/02
279/02

TECHNICAL FIELDS SEARCHED (Int. Cl.3)

C 08 F 279/02
291/02
212/08
212/06
212/04
212/02
212/36

CATEGORY OF CITED DOCUMENTS

X: particularly relevant
A: technological background
O: non-written disclosure
P: intermediate document
T: theory or principle underlying the invention
E: conflicting application
D: document cited in the application
L: citation for other reasons

&: member of the same patent family, corresponding document

X The present search report has been drawn up for all claims

| Place of search | Date of completion of the search | Examiner |
|---|---|---|
| The Hague | 06-02-1981 | PEETERS J.C. |